# EUROPEAN PATENT SPECIFICATION

(11) **EP 4 131 483 B1**
(45) Date of publication and mention of the grant of the patent: **02.12.2026**
(21) Application number: 21883056.0
(22) Date of filing: 01.10.2021
(51) Int. Cl.: H01M 4/1395, H01M 4/04, H01M 4/62, H01M 4/40, H01M 4/134, H01M 10/052, H01M 4/36, H01M 4/58

(54) **ELECTRODE FOR SECONDARY BATTERY AND METHOD OF MANUFACTURING THE SAME**
ELEKTRODE FÜR SEKUNDÄRBATTERIE UND VERFAHREN ZUR HERSTELLUNG EINER ELEKTRODE FÜR SEKUNDÄRBATTERIE
ÉLECTRODE POUR UNE BATTERIE SECONDAIRE ET PROCÉDÉ DE FABRICATION D'UNE ÉLECTRODE POUR UNE BATTERIE SECONDAIRE

(30) Priority: 20.10.2020 KR 20200136314
(43) Date of publication of application: 08.02.2023
(73) Proprietor: LG Energy Solution, Ltd., Seoul 07335 (KR)
(72) Inventor: KIM, Myeongseong, Daejeon 34122 (KR); KIM, Soohyun, Daejeon 34122 (KR); KIM, Kihyun, Daejeon 34122 (KR); KIM, Yunjung, Daejeon 34122 (KR); LEE, Dojoong, Daejeon 34122 (KR)
(74) Representative: Hoffmann Eitle
(86) International application number: PCT/KR2021/013490
(87) International publication number: WO 2022/085984

(56) References cited:
- WO-A1-2020/034036
- CN-A- 109 671 908
- CN-A- 109 671 908
- CN-B- 109 037 627
- JP-B2- 5 461 463
- KR-A- 20200 081 305
- KR-B1- 102 088 478
- US-A1- 2015 357 628

## Description

### [TECHNICAL FIELD]

### Cross Citation with Related Application(s)

This application claims the benefit of and priority of Korean Patent Application No. 10-2020-0136314 filed on October 20, 2020 with the Korean Intellectual Property Office.

The present disclosure relates to an electrode for secondary battery and a method of manufacturing the electrode for secondary battery, and more particularly to an electrode for secondary battery having improved battery performance and life characteristics and a method of manufacturing the electrode for secondary battery.

### [BACKGROUND]

Along with the technology development and increased demand for mobile devices, demand for secondary batteries as energy sources has been increasing rapidly. Among these secondary batteries, a lithium secondary battery having high energy density and a high voltage, a long cycle lifespan, and a low self-discharge rate is commercially available and widely used.

The lithium secondary battery has a structure in which an electrode assembly including a positive electrode, a negative electrode, and a separator interposed between the positive electrode and the negative electrode is stacked or wound, and is configured by incorporating this electrode assembly in a battery case and injecting an electrolyte solution into the battery case. The lithium secondary battery generates electrical energy by oxidation and reduction reactions when lithium ions intercalates/de-intercalates from the positive electrode and the negative electrode.

Conventionally, a lithium (Li) electrode has been used as the negative electrode to improve the energy density of a lithium ion battery. Here, the lithium electrode is an electrode made of lithium (Li) metal. However, in the case of a lithium electrode, problems such as formation of lithium dendrite and making the lithium electrode porous due to repeated charging and discharging of the lithium ion battery have occurred. Problems such as dendrite formation causes an internal short circuit in the secondary battery, increases leakage current, and may cause failure or damage to the secondary battery, or, in the worst case, it may cause a fire, and the life characteristics of the lithium secondary battery may also be deteriorated.

Recently, a lithium alloy electrode has been used as the negative electrode. Here, the lithium alloy electrode is an electrode made of a lithium magnesium alloy (Li/Mg alloy) comprising lithium (Li) and magnesium (Mg). At this time, a surface oxide film (native layer) of LiO₂, Li₂CO₃, LiOH, etc. was formed on the surface of the lithium alloy electrode, so that the life characteristics of the lithium secondary battery were further improved. However, the lithium alloy electrode also causes a volume change due to non-uniform plating/stripping of lithium during continuous charging and discharging, and the surface oxide film formed on the lithium alloy electrode is destroyed, which causes problems such as side reactions and dendrite formation due to the reaction with the electrolyte.

Therefore, in order to use lithium as a negative electrode, there is a growing need to solve the above-mentioned problems and further improve the life characteristics.

CN 109037627 B relates to an alkali metal-based composite negative electrode and its application.

CN 109671908 A discloses a lithium metal electrode and a preparation method thereof.

### [DETAILED DESCRIPTION OF THE INVENTION]

### [Technical Problem]

It is an object of the present disclosure to provide an electrode for secondary battery having improved battery performance and life characteristics and a method of manufacturing the electrode for secondary battery.

The objects of the present disclosure are not limited to the aforementioned objects, and other objects which are not described herein should be clearly understood by those skilled in the art from the following detailed description and the accompanying drawings.

### [Technical Solution]

According to one aspect of the present disclosure, there is provided a method of manufacturing an electrode for secondary battery, the method comprising the steps of: melting lithium (Li) at a first temperature to produce a first melt; stirring a metal fluoride powder together with the first melt at a second temperature to produce a second melt; and producing a lithium alloy electrode with the second melt, wherein the lithium alloy electrode comprises lithium fluoride (LiF);the metal fluoride powder is contained in an amount of 1 wt% or more and 30 wt% or less based on the total weight of the second melt; and the metal contained in the metal fluoride powder includes any one of silicon (Si), magnesium (Mg), zinc (Zn), aluminum (Al), tin (Sn), strontium (Sr), lanthanum (La), silver (Ag), indium (In), tantalum (Ta), and niobium (Nb).

According to another aspect of the present disclosure, there is provided a secondary battery comprising: a lithium alloy negative electrode made of a lithium alloy comprising lithium fluoride (LiF); a positive electrode comprising a current collector to which the positive electrode slurry composition is applied; and a separator interposed between the lithium alloy negative electrode and the positive electrode, wherein the lithium alloy is produced by the method according to the above aspect.

### [Advantageous Effects]

According to embodiments of the present disclosure, an electrode for secondary battery having improved battery performance and life characteristics can be provided.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a flowchart schematically showing a method of manufacturing an electrode for a secondary battery according to an embodiment of the present disclosure;
Fig. 2 is a diagram showing an EDS mapping result for an electrode manufactured by the method for manufacturing an electrode for a secondary battery of Fig. 1; and
Fig. 3 is a view showing the electrochemical characteristic evaluation results of Examples and Comparative Examples.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, throughout the specification, when a portion is referred to as "including" a certain component, it means that the portion can further include other components, without excluding the other components, unless otherwise stated.

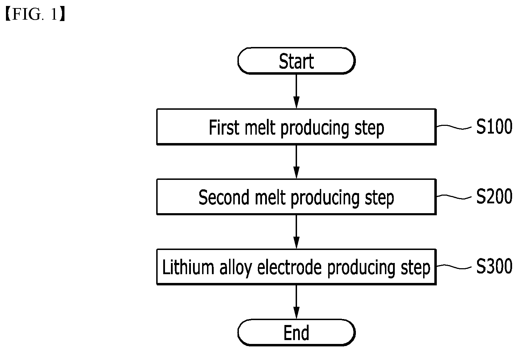

Fig. 1 is a flowchart schematically showing a method of manufacturing an electrode for a secondary battery according to an embodiment of the present disclosure.

The method of manufacturing an electrode for a secondary battery according to an embodiment of the present disclosure is a method of manufacturing a lithium alloy electrode. Here, in the lithium alloy electrode, the "lithium alloy" may mean an alloy composed of a lithium (Li) metal and a different type of metal (M). That is, the lithium alloy electrode may be an electrode made of a lithium alloy.

Referring to Fig. 1, the method for manufacturing an electrode for secondary battery according to an embodiment of the present disclosure includes a first melt producing step S100, a second melt producing step S200, and a lithium alloy electrode producing step S300.

Referring to Fig. 1, the first melt producing step S100 may be a step of producing a first melt solution in which lithium (Li) is melted.

Here, the first melt may be produced by melting lithium (Li) at a first temperature. More specifically, the first melt can be produced by melting lithium (Li) at a temperature of 200 degrees Celsius or more and 500 degrees Celsius or less. More preferably, the first melt can be produced by melting lithium (Li) at a temperature of 250 degrees Celsius or more and 450 degrees Celsius or less. As one example, the first melt can be produced by melting lithium (Li) at a temperature of 300 degrees Celsius or more and 400 degrees Celsius or less.

When the first melt producing step S100 is performed at a temperature that satisfies the above-mentioned range, lithium (Li) may be uniformly melted in the first melt. When the first melt producing step S100 is performed at a temperature of less than 200 degrees Celsius, lithium (Li) may not be sufficiently melted in the first melt. When the first melt producing step S100 is performed at a temperature of more than 500 degrees Celsius, the temperature of the first melt is too high, which may cause problems such as a risk of fire in the process.

Referring to Fig. 1, the second melt producing step S200 may be a step of stirring metal fluoride (MFₓ) powder together with the first melt to produce a second melt.

Further, the second melt can be produced by stirring the first melt and the metal fluoride powder through a reaction as shown in the following Equation 1. $Lithium \left(Li\right) + {MF}_{x} \to LiF + Lithium alloy \left(L/M alloy\right)$ (Equation 1)

Thereby, a lithium alloy (Li/M alloy) and lithium fluoride (LiF) can be formed in the second melt. That is, the lithium alloy can be formed by reacting the metal (M) contained in the metal fluoride (MFₓ) powder with the lithium (Li). Further, the lithium fluoride (LiF) may be formed by reacting the lithium (Li) with fluoride ions (F⁻) contained in the metal fluoride (MFₓ) powder.

Here, the lithium alloy forms lithium fluoride (LiF) on the surface thereof, so that the surface of the lithium alloy can be protected, and the growth of lithium dendrites can be suppressed. Further, lithium fluoride (LiF) has excellent conductivity, and can also improve the battery performance of the lithium alloy.

Here, the metal (M) contained in the metal fluoride (MFₓ) powder includes any one of silicon (Si), magnesium (Mg), zinc (Zn), aluminum (Al), tin (Sn), strontium (Sr), lanthanum (La), silver (Ag), indium (In), tantalum (Ta), and niobium (Nb). As one example, the metal (M) contained in the metal fluoride (MFx) powder may be magnesium (Mg). Further, in the metal fluoride (MFₓ) powder, x differs depending on the type of metal (M), wherein x may be 0.1 or more and 7.9 or less. More preferably, x may be 1 or more and 5 or less.

Further, the first melt can be contained in an amount of 70 wt% or more and 99 wt% or less based on the total weight of the second melt. More preferably, the first melt can be contained in an amount of 80 wt% or more and 99 wt% or less based on the total weight of the second melt. As one example, the first melt can be contained in an amount of 90 wt% or more and 99 wt% or less based on the total weight of the second melt.

Further, the metal fluoride (MFₓ) powder is contained in an amount of 1 wt% or more and 30 wt% or less based on the total weight of the second melt. More preferably, the metal fluoride (MFx) powder can be contained in an amount of 1 wt% or more and 20 wt% or less based on the total weight of the second melt. As one example, the metal fluoride (MFₓ) powder can be contained in an amount of 1 wt% or more and 10 wt% or less based on the total weight of the second melt.

That is, the second melt may include the first melt and the metal fluoride powder (MFₓ) in a weight ratio of 70 wt% to 99 wt%: 1 wt% to 30 wt%.

Here, when the second melt producing step S100 is performed at a weight ratio that satisfies the above-mentioned range, the first melt and the metal fluoride (MFₓ) powder can be uniformly melted in the second melt. When the second melt producing step S100 is performed at a weight ratio outside the above-mentioned range, lithium fluoride (LiF) is not sufficiently formed, or the first melt and the metal fluoride (MFₓ) powder are not well stirred, and thus the lithium alloy may not be sufficiently formed.

Further, the second melt can be produced by stirring the first melt and metal fluoride (MFₓ) powder at a second temperature. Further, the second temperature may be the same as the first temperature or may be higher than the first temperature.

More specifically, the second melt can be produced by stirring the first melt and metal fluoride (MFₓ) powder at a temperature of 200 degrees Celsius or more and 500 degrees Celsius or less. More preferably, the second melt can be produced by stirring the first melt and metal fluoride (MFₓ) powder at a temperature of 250 degrees Celsius or more and 450 degrees Celsius or less. As one example, the second melt can be produced by stirring the first melt and metal fluoride (MFₓ) powder at a temperature of 300 degrees Celsius or more and 400 degrees Celsius or less.

When the second melt producing step S200 is performed at a temperature that satisfies the above-mentioned range, the first melt and the metal fluoride (MFₓ) powder can be uniformly stirred in the second melt. When the first melt producing step S100 is performed at a temperature of less than 200 degrees Celsius, the first melt and the metal fluoride (MFₓ) powder cannot be sufficiently stirred in the second melt. When the first melt producing step S100 is performed at a temperature of more than 500 degrees Celsius, the process cost and time required for cooling the second melt may increase, and the temperature of the second melt may be too high, which may cause problems such as a risk of fire in the process.

Referring to Fig. 1, the lithium alloy electrode producing step S300 may be a lithium alloy electrode producing step using the second melt. More specifically, the lithium alloy electrode may include lithium fluoride (LiF).

Further, the lithium alloy electrode producing step S300 can be manufactured by extruding and rolling a lithium alloy ingot, with the lithium alloy ingot being formed by cooling the second melt of the lithium alloy electrode. As one example, the lithium alloy electrode can be manufactured in the form of a foil.

In the case of the extrusion and rolling steps, the known extrusion and rolling steps can be performed without particular limitation in the present disclosure. As one example, in the case of the rolling step, it can be passed between rotating rolls or performed using a flat plate press.

Thereby, the lithium alloy electrode produced in the lithium alloy electrode producing step S300 can have the effect of improving the surface protection performance of the lithium alloy and suppressing the growth of lithium dendrites because the lithium alloy electrode contains lithium fluoride (LiF). Thereby, in the method for manufacturing an electrode for secondary battery according to an embodiment of the present disclosure, an electrode for secondary battery having improved battery performance and life characteristics can be manufactured.

Next, the negative electrode for secondary battery and the secondary battery including the negative electrode according to the embodiment of the present disclosure will be described.

The secondary battery according to another embodiment of the present disclosure includes the above-mentioned electrode for secondary battery as a negative electrode. More specifically, the secondary battery may include an electrode assembly including the lithium alloy electrode as a negative electrode, a positive electrode, and a separator interposed between the negative electrode and the positive electrode, and an electrolyte.

The positive electrode can be manufactured by applying a positive electrode slurry including a positive electrode active material, a binder, a conductive material, and the like to a positive electrode current collector.

The positive electrode can be manufacture in a form in which a positive electrode slurry containing a positive electrode active material is applied onto a positive electrode current collector, and the positive electrode slurry may further include the conductive material and binder as described above together with the positive electrode active material. As one example, a sulfur electrode may be used as the positive electrode.

The positive electrode active material may include, for example, a layered compound such as lithium nickel oxide (LiNiO₂), or a compound substituted with one or more transition metals; lithium manganese oxides such as chemical formulae Li₁₊ₓMn₂₋ₓO₄ (where x is 0 or more and 0.33 or less), LiMnO₃, LiMn₂O₃, LiMnO₂; lithium copper oxide (Li₂CuO₂); vanadium oxides such as LiV₃0₈, LiFe₃O₄, V₂O₅, and Cu₂V₂O₇; a Ni-site type lithium nickel oxide represented by chemical formula LiNi₁₋ₓMₓO₂ (where M is Co, Mn, Al, Cu, Fe, Mg, B or Ga, and x is 0.01 or more and 0.3 or less); lithium manganese composite oxide represented by chemical formula LiMn₂₋ₓMₓO₂ (where M is Co, Ni, Fe, Cr, Zn or Ta, and x is 0.01 or more and 0.1 or less) or Li₂Mn₃MO₈ (where M is Fe, Co, Ni, Cu or Zn ); lithium manganese composite oxide with spinel structure represented by LiNiₓMn₂₋ₓO₄; LiMn₂O₄ in which a part of Li in chemical formula is substituted with an alkaline earth metal ion; a disulfide compound; Fe₂(MoO₄)₃, and the like, without being limited thereto.

Further, the positive electrode active material may include, for example, a sulfur-carbon composite (S/C). Here, the sulfur-carbon composite (S/C) may include a sulfur material and a carbon material in a ratio of 75 parts by weight: 25 parts by weight. However, the positive electrode active material is not limited thereto, and known positive electrode active materials may be used.

Further, the conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, and carbon fiber, and these may be used either singly or as a mixture of two or more. As one example, as the conductive material, Denka Black, which is a type of acetylene black, can be used.

The binder performs the role of improving adhesion between negative electrode active material particles and an adhesive force between the negative electrode active material and the current collector. Specific examples thereof include polyvinylidene fluoride (PVDF), vinylidenefluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylenepropylene-diene polymer (EPDM), sulfonated-EPDM, styrene butadiene rubber (SBR), fluororubber, or various copolymers thereof, and these may be used either singly or as a mixture of two or more. As one example, the binder may be used by mixing styrene butadiene rubber (SBR) and carboxymethyl cellulose (CMC).

The positive electrode current collector is not particularly limited as long as it has conductivity without causing chemical changes to the battery. For example, stainless steel, aluminum, nickel, titanium, calcined carbon, aluminum or stainless steel having a surface treated with carbon, nickel, titanium, silver, etc. can be used. As one example, the positive electrode current collector may be an aluminum current collector.

The separator separates the negative electrode and the positive electrode, and provides a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure of two or more layers thereof may be used. As one example, the separator may be a polyethylene porous film.

In addition, the electrolyte used herein may include an organic liquid electrolyte, an inorganic liquid electrolyte, a solid polymer electrolyte, a gel type polymer electrolyte, a solid inorganic electrolyte, a molten inorganic electrolyte or the like which can be used in the production of a lithium secondary battery, but is not limited thereto. As one example, as the electrolyte, a mixed solution of lithium bis(trifluoromethanesulfonyl)imide (LiTFSI) and lithium nitrate (LiNO₃) in an organic solvent containing 1,3-dioxolane and dimethyl ether can be used.

Hereinafter, the contents of the present disclosure will be described by way of examples. However, the following examples are for illustrative purposes only.

### <Example > Manufacturing method of Li-Mg alloy negative electrode

97 wt% of lithium was melted at 500 degrees Celsius to produce a first melt. 3 wt% of MgF₂ powder was added to the produced lithium melt, and the mixture was stirred while maintaining 500 degrees Celsius. Then, the stirred melt was cooled to prepare a lithium magnesium alloy ingot containing lithium fluoride (LiF). The prepared lithium magnesium alloy ingot was extruded and rolled to manufacture a negative electrode in the form of a foil.

### <Comparative Example 1> Manufacturing method of Li negative electrode

A lithium metal ingot was subjected to rolling extrusion and rolling to manufacture a negative electrode in the form of a foil.

### <Comparative Example 2> Manufacturing method of Li-Mg negative electrode

A negative electrode was manufactured in the same manner as in Example, except that 3 wt% of magnesium (Mg) powder was added to the lithium metal melt produced in Example, and the produced lithium magnesium alloy ingot did not contain lithium fluoride (LiF).

### <Experimental Example 1 - EDS mapping result>

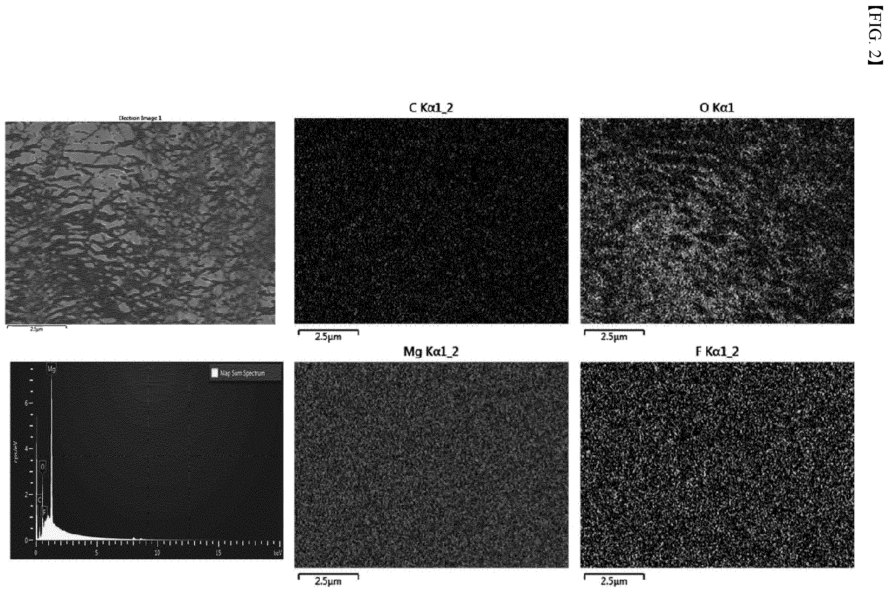

EDS (Energy Dispersive X-ray Spectrometer) analysis was performed on the negative electrode produced in Example, and the results are shown in Fig. 2.

Referring to Fig. 2, it can be confirmed that magnesium (Mg) and fluorine (F) were uniformly distributed on the surface of the negative electrode produced in Example. In addition, it can be confirmed that carbon (C) and oxygen (O) were distributed on the surface of the negative electrode produced in Example. However, carbon (C) and oxygen (O) are components observed on the surface of conventional lithium.

Thereby, it can be confirmed that magnesium (Mg) as a lithium magnesium alloy was distributed on the surface of the negative electrode manufactured as in Example, and fluorine (F) was formed as lithium fluoride (LiF) on the surface of the lithium alloy.

### <Experimental Example 2 - Evaluation of Life Characteristics>

90 parts by weight of a sulfur-carbon composite (S/C 75:25 parts by weight) as a positive electrode active material, 5 parts by weight of Denka Black as a conductive material, and 5 parts by weight of styrene-butadiene rubber/carboxymethylcellulose (SBR/CMC 7:3) as a binder were mixed to prepare a positive electrode slurry composition. The prepared positive electrode slurry composition was applied onto an aluminum current collector, and dried at 50 degrees Celsius for 12 hours, and pressed with a roll press device to manufacture a positive electrode.

Here, as the separator, a polyethylene porous film of 20 µm having a porosity of 68% was prepared.

Here, as the electrolyte, a mixture, in which lithium bis(trifluoromethanesulfonyl)imide (LiTFSI) at a concentration of 1M and 1 wt% of lithium nitrate (LiNO₃) were mixed in an organic solvent containing 1, 3-dioxolane and dimethyl ether (1:1 volume ratio), was prepared.

The produced positive electrode and each negative electrode produced in Example 1, Comparative Example 1, and Comparative Example 2 were prepared, the prepared separator was interposed between the positive electrode and the negative electrode, and secondary batteries were respectively prepared using 0.1 ml of the prepared electrolyte.

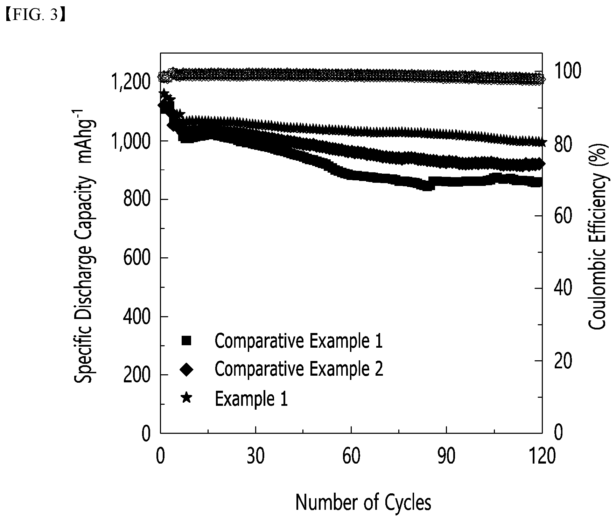

The evaluation results of the life characteristics of each secondary battery are shown in Fig. 3 and Table 1.

**[Table 1]**

| | Capacity retention rate (%) relative to the 7th cycle (@120 cycles) |
|---|---|
| Comparative Example 1 | 85.1 % |
| Comparative Example 2 | 89.5 % |
| Example 1 | 93.7 % |

Referring to Fig. 3 and Table 1, it can be confirmed that Example shows a high capacity retention rate, unlike Comparative Examples 1 and 2. Thereby, it can be confirmed that in the case of Example, lithium fluoride (LiF) was formed on the surface of the negative electrode, and as the surface of the negative electrode was protected, the life characteristics are excellent.

Although the invention has been shown and described above with reference to the preferred embodiments, numerous other modifications and improvements can be devised by those skilled in the art using the basic principles of the invention defined in the appended claims, which also falls under the scope of the present disclosure.

## Claims

1. A method of manufacturing an electrode for secondary battery, the method comprising the steps of:
melting lithium (Li) at a first temperature to produce a first melt;
stirring a metal fluoride powder together with the first melt at a second temperature to produce a second melt; and
producing a lithium alloy electrode with the second melt,
wherein:
the lithium alloy electrode comprises lithium fluoride (LiF);
the metal fluoride powder is contained in an amount of 1 wt% or more and 30 wt% or less based on the total weight of the second melt; and
the metal contained in the metal fluoride powder comprises any one selected from the group consisting of silicon (Si), magnesium (Mg), zinc (Zn), aluminum (Al), tin (Sn), strontium (Sr), lanthanum (La), silver (Ag), indium (In), tantalum (Ta), and niobium (Nb).

2. The method of manufacturing an electrode for secondary battery according to claim 1, wherein:
the metal contained in the metal fluoride powder is magnesium (Mg).

3. The method of manufacturing an electrode for secondary battery according to claim 2, wherein:
the metal fluoride powder is contained in an amount of 1 wt% or more and 10 wt% or less based on the total weight of the second melt.

4. The method of manufacturing an electrode for secondary battery according to claim 1, wherein:
the lithium alloy electrode is manufactured in the form of a foil.

5. The method of manufacturing an electrode for secondary battery according to claim 1, wherein:
the first temperature is 200 degrees Celsius or more and 500 degrees Celsius or less, and
the second temperature is 200 degrees Celsius or more and 500 degrees Celsius or less.

6. The method of manufacturing an electrode for secondary battery according to claim 5, wherein:
the second temperature is equal to or higher than the first temperature.

7. The method of manufacturing an electrode for secondary battery according to claim 1, wherein:
the lithium alloy electrode is manufactured by extruding and rolling a lithium alloy ingot, with the lithium alloy ingot being formed by cooling the second melt.

8. A secondary battery comprising:
a lithium alloy negative electrode made of a lithium alloy comprising lithium fluoride (LiF);
a positive electrode comprising a current collector to which a positive electrode slurry composition is applied; and
a separator interposed between the lithium alloy negative electrode and the positive electrode,
wherein the lithium alloy electrode is produced by the method according to claim 1.

## Patentansprüche

1. Verfahren zur Herstellung einer Elektrode für eine Sekundärbatterie, das Verfahren umfassend die folgenden Schritte:
das Schmelzen von Lithium (Li) bei einer ersten Temperatur, um eine erste Schmelze herzustellen;
das Rühren eines Metallfluoridpulvers zusammen mit der ersten Schmelze bei einer zweiten Temperatur, um eine zweite Schmelze herzustellen; und
das Herstellen einer Elektrode aus einer Lithiumlegierung mit der zweiten Schmelze,
worin:
die Elektrode aus einer Lithiumlegierung Lithiumfluorid (LiF) umfasst;
das Metallfluoridpulver in einer Menge von 1 Gew.-% oder mehr und 30 Gew.-% oder weniger, basierend auf dem Gesamtgewicht der zweiten Schmelze, enthalten ist; und
das im Metallfluoridpulver enthaltene Metall eines umfasst, ausgewählt aus der Gruppe, bestehend aus Silicium (Si), Magnesium (Mg), Zink (Zn), Aluminium (Al), Zinn (Sn), Strontium (Sr), Lanthan (La), Silber (Ag), Indium (In), Tantal (Ta) und Niob (Nb).

2. Verfahren zur Herstellung einer Elektrode für eine Sekundärbatterie gemäß Anspruch 1, worin:
das im Metallfluoridpulver enthaltene Metall Magnesium (Mg) ist.

3. Verfahren zur Herstellung einer Elektrode für eine Sekundärbatterie gemäß Anspruch 2, worin:
das Metallfluoridpulver in einer Menge von 1 Gew.-% oder mehr und 10 Gew.-% oder weniger, basierend auf dem Gesamtgewicht der zweiten Schmelze, enthalten ist.

4. Verfahren zur Herstellung einer Elektrode für eine Sekundärbatterie gemäß Anspruch 1, worin:
die Elektrode aus einer Lithiumlegierung in Form einer Folie hergestellt ist.

5. Verfahren zur Herstellung einer Elektrode für eine Sekundärbatterie gemäß Anspruch 1, worin:
die erste Temperatur 200°C oder mehr und 500°C oder weniger beträgt und die zweite Temperatur 200°C oder mehr und 500 °C oder weniger beträgt.

6. Verfahren zur Herstellung einer Elektrode für eine Sekundärbatterie gemäß Anspruch 5, worin:
die zweite Temperatur gleich oder höher als die erste Temperatur ist.

7. Verfahren zur Herstellung einer Elektrode für eine Sekundärbatterie gemäß Anspruch 1, worin:
die Elektrode aus einer Lithiumlegierung durch Extrudieren und Walzen eines Lithiumlegierungsblocks hergestellt ist, wobei der Lithiumlegierungsblock durch Abkühlen der zweiten Schmelze geformt ist.

8. Sekundärbatterie, umfassend:
eine negative Elektrode aus einer Lithiumlegierung, die Lithiumfluorid (LiF) umfasst;
eine positive Elektrode, die einen Stromabnehmer umfasst, auf den eine Aufschlämmung für eine positive Elektrode aufgetragen ist; und
einen Separator, der zwischen der negativen Elektrode aus einer Lithiumlegierung und der positiven Elektrode angeordnet ist,
worin die Elektrode aus einer Lithiumlegierung durch das Verfahren gemäß Anspruch 1 hergestellt ist.

## Revendications

1. Procédé de fabrication d'une électrode pour une batterie secondaire, le procédé comprenant les étapes consistant à :
faire fondre du lithium (Li) à une première température pour produire une première matière fondue ;
agiter une poudre de fluorure métallique conjointement avec la première matière fondue à une deuxième température pour produire une deuxième matière fondue ; et
produire une électrode en alliage de lithium avec la deuxième matière fondue,
dans lequel :
l'électrode en alliage de lithium comprend du fluorure de lithium (LiF) ;
la poudre de fluorure métallique est présente en une quantité de 1 % en poids ou plus et de 30 % en poids ou moins sur la base du poids total de la deuxième matière fondue ; et
le métal contenu dans la poudre de fluorure métallique comprend un élément quelconque sélectionné parmi le groupe consistant en le silicium (Si), le magnésium (Mg), le zinc (Zn), l'aluminium (Al), l'étain (Sn), le strontium (Sr), le lanthane (La), l'argent (Ag), l'indium (In), le tantale (Ta) et le niobium (Nb).

2. Procédé de fabrication d'une électrode pour une batterie secondaire selon la revendication 1, dans lequel :
le métal contenu dans la poudre de fluorure métallique est le magnésium (Mg).

3. Procédé de fabrication d'une électrode pour une batterie secondaire selon la revendication 2, dans lequel :
la poudre de fluorure métallique est présente en une quantité de 1 % en poids ou plus et de 10 % en poids ou moins sur la base du poids total de la deuxième matière fondue.

4. Procédé de fabrication d'une électrode pour une batterie secondaire selon la revendication 1, dans lequel :
l'électrode en alliage de lithium est fabriquée sous forme de feuille.

5. Procédé de fabrication d'une électrode pour une batterie secondaire selon la revendication 1, dans lequel :
la première température est de 200 degrés Celsius ou plus et de 500 degrés Celsius ou moins, et
la deuxième température est de 200 degrés Celsius ou plus et de 500 degrés Celsius ou moins.

6. Procédé de fabrication d'une électrode pour une batterie secondaire selon la revendication 5, dans lequel :
la deuxième température est égale à ou supérieure à la première température.

7. Procédé de fabrication d'une électrode pour une batterie secondaire selon la revendication 1, dans lequel :
l'électrode en alliage de lithium est fabriquée par extrusion et laminage d'un lingot en alliage de lithium, le lingot en alliage de lithium étant formé par refroidissement de la deuxième matière fondue.

8. Batterie secondaire comprenant :
une électrode négative en alliage de lithium constituée d'un alliage de lithium comprenant du fluorure de lithium (LiF) ;
une électrode positive comprenant un collecteur de courant sur lequel une composition de suspension d'électrode positive est appliquée ; et
un séparateur interposé entre l'électrode négative en alliage de lithium et l'électrode positive,
dans laquelle l'électrode en alliage de lithium est produite par le procédé selon la revendication 1.
